# EUROPEAN PATENT SPECIFICATION

(11) **EP 3 495 691 B1**
(45) Date of publication and mention of the grant of the patent: **06.03.2024**
(21) Application number: 18211077.5
(22) Date of filing: 07.12.2018
(51) Int. Cl.: F16H 55/08, B62M 9/10, F16H 55/30

(54) **IMPROVED CHAINRING WITH NARROW AND WIDE TEETH**
VERBESSERTES KETTENBLATT MIT SCHMALEN UND BREITEN ZÄHNEN
COURONNE DE CHAÎNE AMÉLIORÉE À DENTS ÉTROITES ET LARGES

(30) Priority: 08.12.2017 DE 102017129358
(43) Date of publication of application: 12.06.2019
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- EP-A1- 3 112 246
- EP-A2- 0 021 839
- DE-U1-202017 002 445

## Description

The present invention relates to an improved chainring with narrow and wide teeth, in particular to an improved solitary chainring with narrow and wide teeth for use with a conventional chain in a bicycle drivetrain system including a bicycle crank. The chainring according to the present invention may have an oval or a round shape.

Generally, bicycle chainrings with a combination of alternating wide and narrow teeth are well-known in the art.

For instance, JP S56-42489 U discloses a chainring for a bicycle wherein a plurality of teeth are arranged circumferentially at the outer periphery of the chainring. The teeth are arranged on the outer periphery of the chainring so that narrow and wide teeth alternate with the narrow teeth having in the top view roughly the outline of a plus sign and the narrow teeth having in the top view roughly the outline of a minus sign. Both the narrow and the wide teeth have a symmetrical configuration about a radial centerline when viewed in an axial direction of the chainring. Furthermore, both the narrow and the wide teeth have a symmetrical configuration when viewed along a plane bisecting the chainring into an outboard and an inboard side, with the wide tooth being formed by protrusions extending from the bisecting plane.

The chainring of JP S56-42489 U is used for driving a conventional chain, in particular a roller drive chain that includes outer chain links adapted to engage the wide teeth and inner chain links adapted to engage the narrow teeth. The outer chain links are pivotally mounted and connected to the inner chain links by means of pins, so that the outer chain links are alternatingly interleaved with the inner chain links in a manner corresponding to the alternating wide and narrow teeth. The outer chain links have paired outer link plates and the inner chain links have paired inner link plates.

The roller drive chain of JP S56-42489 U further includes rollers arranged around the pins and sized so as to mate with the space between the respective teeth as they are arranged circumferentially along the chainring.

Nevertheless, the know chainring according to JPS56-42489 U has the disadvantage that the interaction between the chainring and the roller drive chain may cause wear of the teeth and also may cause noise which is aggravated with the gradual wear of the teeth in the course of use of the bicycles. Further, if the chainring is made of a less resistant material than the roller drive chain, the wear problem of the chainring is also aggravated.

A further chainring is known from EP 2 602 176 A1. The latter known chainring has a construction similar to that of JP S56-42489 U in that narrow and wide teeth are provided in an alternating manner circumferentially on the chainring with the wide teeth having in the top view roughly the outline of a plus sign and the narrow teeth having in the top view roughly the outline of a minus sign. The roller drive chain of EP 2 602 176 A1 is devised in a manner similar to that of JP S56-42489 U, that is, in a conventional manner, including the feature that both the inner and the outer link plates have a narrow middle part extending between the two circular ends which helps to determine the positioning of the roller drive chain.

In an attempt to improve the solution of JP S56-42489 U with both the narrow and the wide teeth having a symmetrical configuration about a radial centerline when viewed in an axial direction of the chainring, EP 2 602 176 A1 proposes to devise the teeth with an asymmetry in the axial direction wherein, when viewed in the driving direction and as shown in Fig. 5 of EP 2 602 176 A1, the front flank of a tooth is steeper and the rear flank of a tooth is flatter. This is true for both the narrow and the wide teeth.

In addition, according to the know solution of EP 2 602 176 A1, as shown in Fig. 7 thereof, both the wide and the narrow teeth may have an asymmetric configuration when viewed along a plane bisecting the chainring into an outboard and an inboard side, the asymmetry being provided by a respective chamfer formed at the outboard side of each tooth. The chamfer is formed by removal of material at the full outboard width of the respective tooth.

According to yet another known solution of EP 2 602 176 A1, as shown in Figs. 13 and 14 thereof, the asymmetry along a plane bisecting the chainring into an outboard and an inboard side is present only in the wide teeth by partial removal or complete omission of the protrusion (i.e. the arm of the "plus" sign at the inboard side).

The solutions of EP 2 602 176 A1 are still not free from shortcomings as the chainring does not ensure a smooth and silent run of the roller drive chain. In fact, only after a few kilometers of operation the chain is prone to rattling.

In addition, the chainring of EP 2 602 176 A1 is mechanically weakened by the removal of a substantial amount of material at the teeth and may break. The latter problem is pronounced if the chainring is made of a material that is less durable than the material of the chain, for instance in a combination wherein the chainring is made of aluminum and the chain is made of steel.

A further chain ring with alternating wide and narrow teeth is known from DE 10 2015 008 662 A1, wherein a hook shaped protrusion on the right-hand side of each tooth renders the exit of the roller from the space between the teeth more difficult. In other words, the hook shaped protrusion works against the exit of the roller from the space between the teeth, and thus against the smooth and silent operation of the chainring.

Accordingly, an object of the present invention is to provide a chainring with narrow and wide teeth, in particular an improved solitary chainring with narrow and wide teeth for use with a conventional chain in a bicycle drivetrain system including a bicycle crank which overcomes the shortcomings of the prior art and which ensures a smooth running of a conventional chain, in particular a roller drive chain, while substantially reducing the wear of chainring.

Within the scope of the above object, the present invention aims at providing a chainring with narrow and wide teeth, in particular an improved solitary chainring with narrow and wide teeth for use with a conventional chain in a bicycle drivetrain system including a bicycle crank, wherein the chainring runs silently and smoothly, and wherein the wear is minimized, so that the silent and smooth operation of the chain and the chainring is maintained for a long time.

A further object of the present invention is to provide a chainring with narrow and wide teeth, in particular an improved solitary chainring with narrow and wide teeth for use with a conventional chain in a bicycle drivetrain system including a bicycle crank, which can be manufactured from lighter materials and/or materials that can be more easily processed with CNC-machines, such as, for instance, aluminum.

A particular object of the present invention is to provide a chainring with narrow and wide teeth, in particular an improved solitary chainring with narrow and wide teeth for use with a conventional chain in a bicycle drivetrain system including a bicycle crank, wherein the chainring drives a cassette which provides multiple gear ratios to a rider.

The above objects and further objects of the present invention which will become apparent hereinafter are achieved by a chainring with narrow and wide teeth, in particular a solitary chainring with narrow and wide teeth for use with a conventional chain in a bicycle drivetrain system including a bicycle crank, as defined in the following claims.

The objects, advantages and novel features of the present invention will become more apparent from the following detailed description of the currently preferred embodiments thereof when taken in conjunction with the accompanying drawings, wherein
Fig. 1 shows a general view of the chainring of the present invention with narrow and wide teeth when viewed in a lateral view from an outboard side;
Fig. 2 shows a section of the chainring of Fig. 1 in a perspective view from the outboard side;
Fig. 3 shows a section of the chainring of Fig. 1 in a side view from the outboard side;
Fig. 4 shows a section of the chainring of Fig. 1 in a top view;
Fig. 5 shows a section of the chainring of Fig. 1 in a top view including a section of the chain in a schematic representation in the mounted state of the chainring on a bicycle;
Fig. 6 shows a variation of the chainring of Fig. 1 in a perspective view from the outboard side;
Fig. 7 shows the variation of Fig. 2 in a side view from the outboard side; and
Fig. 8 shows a schematic representation of the chainring of the previous figures in a top view similar to that of Fig. 5 including the schematic representation of the chain and the cassette in the mounted state of the chainring on a bicycle.

Preferred embodiments of the invention will herein be described with reference to the drawings. It will be understood that the drawings and descriptions set out herein are provided for illustration only and do not limit the invention as defined by the claims appended hereto and any and all of their equivalents.

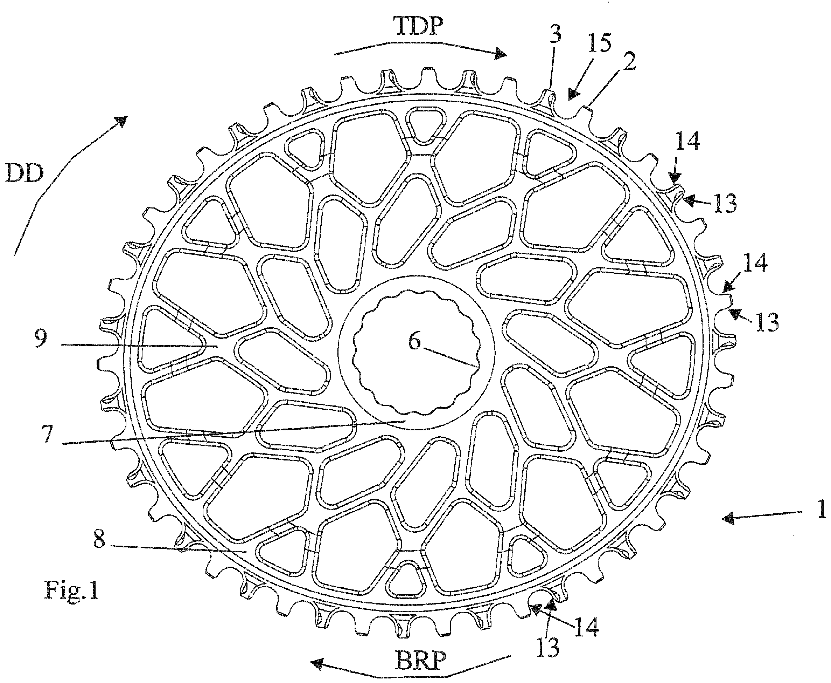

With reference to Fig. 1 the chainring of the present invention generally designated by reference numeral 1 is shown in a lateral view from the outboard side. The chainring 1 of Fig. 1 is shown as an oval chainring but it can also be embodied as a round chainring. The chainring 1 includes a central aperture 6 for fitting onto a boss portion of a bicycle crank (not shown) or a bicycle hub (also not shown) in a conventional manner. The chainring 1 further includes in a conventional manner a central ring 7 and a peripheral section 8 connected by stays 9 of an irregular shape to the central ring 7. The peripheral section 8 is shaped as a circular ring or an oval ring. The irregular stays 9 advantageously render the chainring 1 lighter in weight while ensuring at the same time sufficient stiffness and rigidity in use. The chainring 1 includes a plurality of narrow teeth 2 alternated with a plurality of wide teeth 3, wherein each narrow tooth 2 is alternated with a wide tooth 3. Thus, the narrow and wide teeth 2, 3 form respective groups of teeth with an equal number of teeth in each group, wherein each narrow tooth 2 is preceded and succeeded by a wide tooth 3 and vice versa. The teeth 2, 3 include a top part which is, as known in the art, trapezoidal. The teeth 2, 3 have preferably the same height. The further configuration of the teeth will be described in detail hereinafter.

Preferably, the chainring 1 is made of aluminum or a similar material. Also, preferably the chainring 1 is a solitary or a single chainring. Nevertheless, the person skilled in the art will appreciate that the chainring 1 of the present invention may be part of a multi-chainring structure including a plurality of chainrings.

Further preferably, the chainring 1 of the present invention driven by the crank of the bicycle, is adapted to drive a chain. Both the chain and the crank are of conventional design and therefore, the detailed description thereof will be omitted. For instance, the crank and the chain may be designed as described in JP S56-42489 U and/or EP 2 602 176 A1. With particular reference to the chain, which is only schematically represented in the figures of the present application, the same is embodied as a roller drive chain that includes outer chain links adapted to engage the wide teeth and inner chain links adapted to engage the narrow teeth. The outer chain links are pivotally mounted and connected to the inner chain links by means of pins, so that the outer chain links are alternatingly interleaved with the inner chain links in a manner corresponding to the alternating wide and narrow teeth 3, 2. The outer chain links have paired outer link plates and the inner chain links have paired inner link plates. Preferably, both the inner and the outer link plates have a narrow middle part extending between the two circular ends.

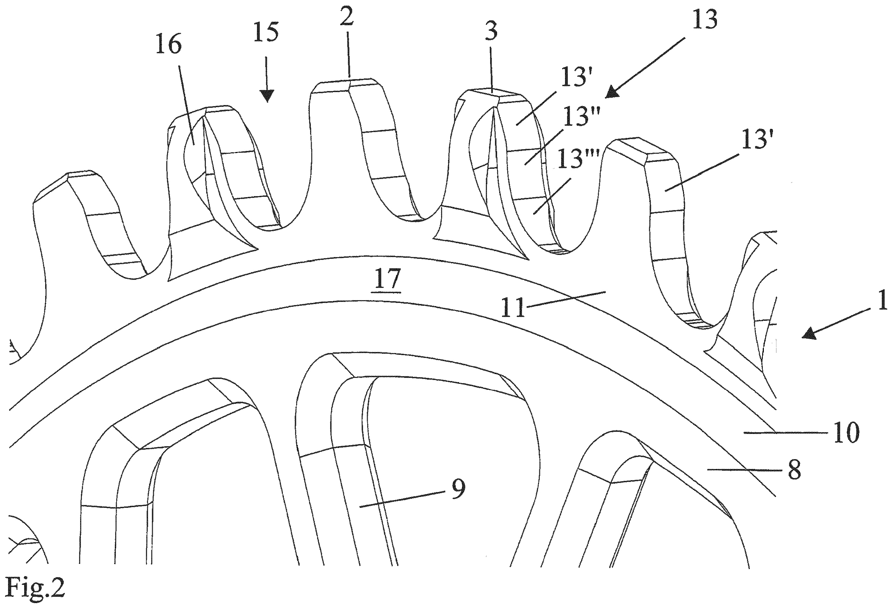

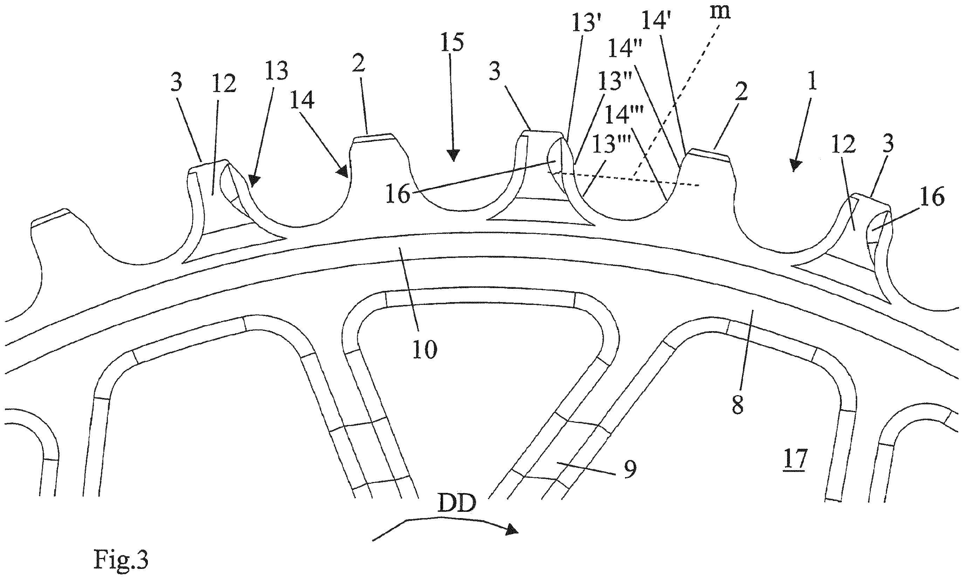

With reference to Figs. 2 and 3 which show a section of the chainring of Fig. 1 in a perspective and in a lateral view, respectively, from the outboard side, the chainring 1 further includes a slanted section 10 extending circumferentially around the peripheral section 8 and a planar section 11 extending circumferentially around the slanted section 10. The thickness of the peripheral section 8 (when viewed in the axial direction) is higher than the thickness of the planar section 11. The transition from the thickness of the peripheral section 8 to the thickness of the planar section 11 is provided by the slanted section 10. The slanted section 10 is provided preferably both at the outboard side and at the inboard side of the chainring 1. The planar section 11 and the peripheral section 8 extend on respective planes which are parallel or substantially parallel to the plane of the chainring 1. In the context of the present description and claims the plane of the chainring 1 is the plane bisecting the chainring 1 into an outboard and an inboard side.

The planar section 11 which extends circumferentially and defines the outermost part of the chainring 1 includes the narrow and the wide teeth 2, 3.

The narrow teeth 2 have the same or substantially the same axial extension as the planar section 11. This can be achieved preferably by machining the narrow outboard and inboard surfaces of the narrow teeth 2 at the same time as the planar section 11.

The wide teeth 3 are provided as protrusions 12 from the planar section 11, in a manner similar to JP S56-42489 U. Preferably, the wide teeth 3 can be obtained by machining an axially wider chainring blank so as to obtain the planar section 11 including the narrow teeth 2.

Preferably the machining is performed by means of CNC milling, in particular by CNC milling of an aluminum chainring blank.

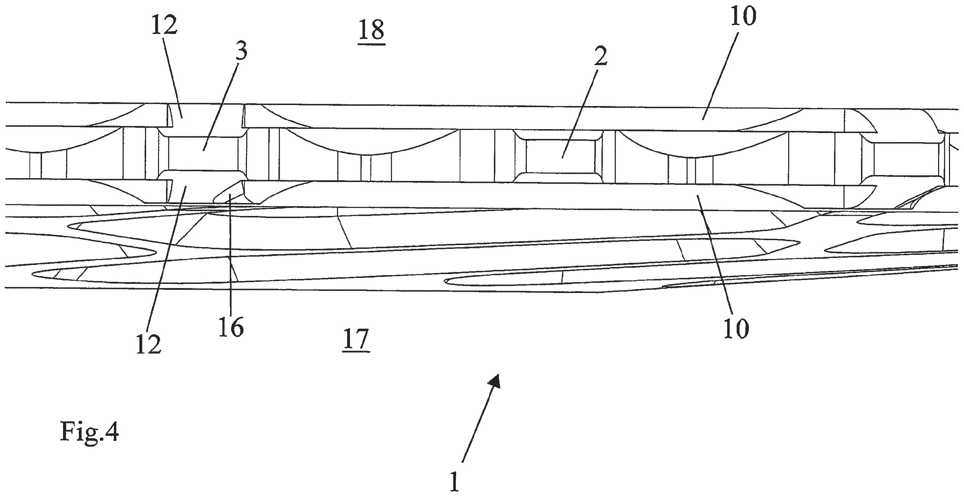

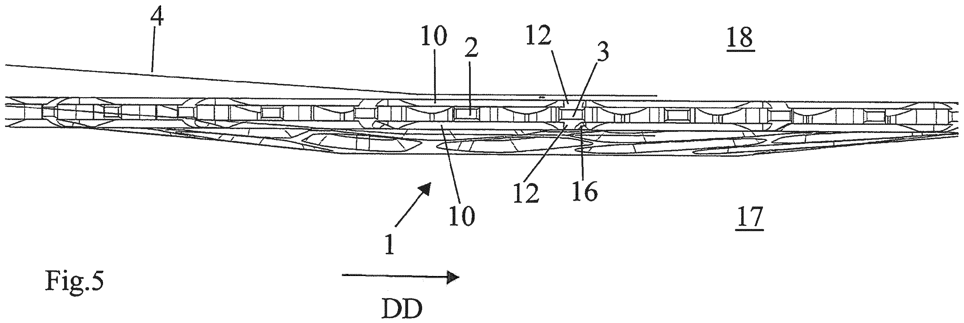

With reference to Figs. 4 and 5 which show a top view of the chainring 1 it can be seen that the protrusions 12 of the wide teeth 3 are provided both at the outbound and at the inbound side of the chainring 1.

With renewed reference to Figs. 1 through 5 it can be seen that according to the invention both the narrow and the wide teeth 2, 3 have an asymmetrical shape when viewed in the axial direction of the chainring 1. Two consecutive teeth 2, 3 are spaced when viewed in the axial direction of the chainring 1 by a space 15 defining a tooth valley for accommodating a roller of the chain. Thus, according to the present description, the tooth valley or the space 15 is extending from the top of one tooth to the top of the adjacent tooth. Obviously, the tooth valley or the space 15 does not include the tops of the teeth.

In particular, according to the invention, a front flank 13 of each tooth has a first chamfer 13' of a larger extension (or surface) than a second chamfer 14' of the rear flank 14. Preferably, the front flank 13 and the rear flank 14 of each tooth 2, 3 and/or the respective first and second chamfers 13', 14' thereof extend on respective planes or plane sections which are perpendicular or substantially perpendicular to the plane of the chainring 1. Also, the whole surface of the periphery of the chainring 1 or sections of the surface of the periphery of the chainring 1 may be preferably perpendicular or substantially perpendicular to the plane of the chainring 1. Generally, the surface of the periphery of the chainring 1 is defined by the respective tops of the teeth 2, 3 and the front and rear flanks 13, 14, while the sections of the surface periphery may be defined by the top of the teeth 2, 3 or the front and rear flanks 13, 14 or sub-sections thereof. According to the present invention the front flank 13 is the section of a tooth extending from the top of the tooth to the bottom of the space 15, when viewed in the axial direction of the chainring 1, and the rear flank 14 is the section of the tooth extending from the bottom of the space 15 to the top of the adjacent tooth, when viewed in the axial direction of the chainring 1.

As is known in the art, the front and rear flanks of the teeth are defined in the drive direction of the chainring which in Figs. 3 and 5 is indicated by the arrow DD. The rollers (not shown) of the drive chain 4 will come from the left hand side (i.e. from the drive direction shown in Figs. 3 and 5) and enter the space 15 between the teeth 2, 3 over the rear flanks 14 at the top of the chainring 1, such that the front flank 13 of each tooth 2, 3 pushes a respective roller and conveys the force from the crank via the chainring 1 to the chain 4. By means of the first chamfer 13' having a larger extension (or larger surface) than the second chamfer 14', the release of the roller from the space 15 between the teeth 2, 3 is facilitated, as explained hereinbelow in more detail. This is in contrast to EP 2 602 176 A1, where the complete lack of chamfer at the front flank makes the roller releasing operation much more difficult. This is also in contrast to DE 10 2015 008 662 A1 where the hook shaped protrusion 24 renders the exit of the roller from the space between the teeth.

On the other hand, according to the invention, as the second chamfer 14' has a smaller extension (or smaller surface) than the first chamfer 13', the rear flank 14 acts as a "hook" for the roller while the roller is in the space 15 between the teeth 2, 3 on the top of the chainring 1. The top of the chainring 1 is intended to describe a state wherein the rollers of the chain 4 enter the top "driving" position, and thus the chain 4 starts to engage the chainring 1 at the top thereof coming from the left-hand side as indicated in Fig. 5. For better understanding the top "driving" position is indicated by TDP in Fig. 1.

In the TDP the "hook" will not let the roller jump up while coasting on rough terrain with the bicycle. In fact, while coasting on rough terrain, there is no force on the rollers and the chain is more prone to move freely. This is in contrast to the operation when the rider pedals and pushes on, so that the chain is subject to a force which hinders the roller of the chain from falling off the chainring. The falling off of the chain from the chainring happens basically when one coasts on a terrain without pedaling. Accordingly, the "hook" of the present invention advantageously acts to keep the chain in place when the chain is more "free", namely when there is no pedaling action and subsequently no force is exerted on the chain.

The hook action of the rear flank 14 of each tooth 2, 3 according to the invention is in contrast to the action of EP 2 602 176 A1, wherein the front flank acts as a hook. Same is true for DE 10 2015 008 662 A1.

When considering the situation at the bottom of the chainring 1 (when the chain is about to be released from the chainring 1 in the bottom "release" position indicated as BRP in Fig. 1) the front flank 13 of each tooth 2, 3 acts as a releasing part for the roller. As the front flank 13 has the first chamfer 13' with the larger surface, no "hook" effect is present at the front flank 13 and this allows the chain roller to escape freely. Thus, according to the invention, advantageously, the chain and the chain rollers can leave the chainring in a smooth manner in the BRP.

The latter is in contrast to EP 2 602 176 A1 or DE 10 2015 008 662 A1, where the "hook"-shaped front flank acts as the releasing flank at the BRP. This makes it a lot more difficult for the chain rollers to escape the space between the teeth. Especially when the chain teeth of EP 2 602 176 A1 wear out a bit, pronouncing the "hook" shape of the front flanks of the teeth, the release of the chain rollers becomes even more of a problem.

Advantageously, the present invention solves the above shortcomings of the prior art by providing "hook"-less front flanks 13 for the chain roller release operation and "hook"-shaped rear flanks 14 for the chain roller receiving operation. The "hook"-less front flanks 13 may be formed by a longer chamfer and/or by a flatter chamfer and the "hook"-shaped rear flanks 14 may be formed by a shorter chamfer or a steeper chamfer.

By means of the asymmetric configuration of the front and rear flanks of the teeth which is described above, the present invention provides for a smoother operation, holds the chain on the chainring perfectly while coasting and most importantly the configuration of flanks of the teeth according to the present invention allows the chain rollers to be easily released from space 15 between teeth 2, 3 when exiting the chainring 1 at the BRP, as compared to the prior art solutions. Furthermore, the driving operation of the chain is less noisy for a much longer time than in the prior art.

As shown in the figures of the application the asymmetry of the narrow and the wide teeth when viewed from the axial direction of the chainring is the same, but in further embodiments it is conceivable that the asymmetry of the wide teeth is different from the asymmetry of the narrow teeth provided that the front flank of each tooth is flatter (i.e. has a larger chamfer surface) than the chamfer surface of the rear flank of a subsequent tooth, when viewed in the drive direction of the chainring.

Preferably, when viewed in Fig. 3, the first chamfer 13' of the front flank 13 of each tooth 2, 3 starts from the top or crown of the tooth and extends in a straight line when viewed from the axial direction of the chainring 1. In other words, the first chamfer 13' defines a planar surface perpendicular to the plane of the chainring 1, wherein the planar surface is inclined with respect to the radial direction of the chainring 1. The maximum extension (or surface) of the first chamfer 13' is up to a section 13'" of the front flank 13 of the tooth which is responsible for the transmission of the force from the roller. Thus, the first chamfer 13' of the front flank 13 can be flatter (i.e. more inclined with respect to the radial direction of the chainring 1), as it does not engage the roller and does not transmit the force. Furthermore, the first chamfer 13' of the front flank 13 is responsible for releasing the chain with the chain rollers when a tooth is in the BRP and accordingly the release process is greatly improved.

The extension of the first chamfer 13' of the front flank 13 is determined as a compromise in order to maintain the mechanical stability of the tooth and to facilitate the smoother release of the roller in the BRP. In the preferred depicted embodiment of Fig. 3, the first chamfer 13' extends from about 20% to about 40%, more preferably from about 25% to about 35% and most preferably for about 30% of the height of the front flank 13 (when viewed in the axial direction of the chainring 1) and is followed by a steep section 13" (preferably a section that is parallel to the radial direction of the chainring 1) extending up to the section 13‴ of the front flank 13 of the tooth which is responsible for the transmission of the force from the roller. However, the person skilled in the art will appreciate that other ratios of the first chamfer 13' and the steep section 13" of the front flank 13 are conceivable.

The rear flank 14 of a tooth has a section 14‴ which is symmetrical to the section 13‴ of the front flank 13 of the tooth which is responsible for the transmission of the force from the roller, when viewed in the axial direction of the chainring 1. The outline defined by the latter two sections 13‴, 14‴ between the teeth 2, 3, when viewed in the axial direction of the chainring 1, is substantially that of a semicircle to match the rollers of the chain exactly, as indicated by the dotted line m in Fig. 3.

Following the section 14‴ of the rear flank 14 there is a steep section 14" that is substantially symmetrical to the steep section 13" of the front flank 13, when viewed in the axial direction of the chainring (1), but has a larger extension. The steep section 14" of the rear flank 14 is followed by the second chamfer 14' of the rear flank 14. Preferably, the second chamfer 14' of the rear flank 14 is also substantially symmetrical to the first chamfer 13' of the front flank 13, when viewed in the axial direction of the chainring (1). At any rate, according to the invention, the second chamfer 14' has a smaller extension than the first chamfer 13' with a preferred ratio being from about 1:1.5 to about 1:2.5, more preferred from about 1:1.75 to about 1:2.25 and most preferred of about 1:2 when viewed in the axial direction of the chainring.

The second chamfer 14' at the rear flank 14 advantageously provides for a sufficient steepness in the remaining outline of the rear flank at the space 15 to keep the chain roller on the bottom of the tooth valley in the space 15 even when the bike is coasting. In other words, the second chamfer 14' of the rear flank 14 forms, according to the invention, the "hook" for retaining the chain rollers when the bike is coasting.

The second chamfer 14'of the rear flank 2 is further sized such as to allow the chain roller to pass it in the TDP when the chain is under force. In fact, when the chain is under force (in the pedaling operation) the roller moves slightly closer to the front flank 13 of the tooth and the roller touches/engages the front flank 13, leaving some room at rear flank 14. When the bike is coasting (thus no driving force is exerted on the chain) the rear flank 14 is steep over a sufficient extension (thus the "hook" is large enough) for the chain roller to have difficulty to jump off the space 15 between the teeth 2, 3, if the chain is bouncing due to rough terrain.

According to a further aspect of the invention each of the wide teeth 3 is provided with a third chamfer designated with reference numeral 16. The third chamfer 16 is provided only at the outboard side of the wide tooth 3 at the front flank side of the tooth. As used hereinafter the front flank side of the tooth is intended to designate the side of a tooth defining the front flank 13 thereof. For better comprehension the outboard side of the chainring 1 is indicated with reference numeral 17 in the figures of the application while the inboard side of the chainring 1 is indicated with reference numeral 18.

As can be best seen in Figs. 2 and 3 the third chamfer 16 is provided as a cutaway portion of the protrusion 12 of the wide tooth 3 at the outboard side 17 in the section of the protrusion 12 close to the front flank 13. It has been found to be particularly advantageous if the third chamfer 16 is provided by removing from about 5% to about 20% and more preferably from about 10% to about 15% of the volume of the protrusion 12 of the wide tooth 3 at the outboard side.

The third chamfer 16 is provided preferably as a planar surface having an obtuse angle with respect to the plane of the chainring 1. The third chamfer 16 may be obtained, for instance, by machining away a portion of the protrusion 12 at the outboard side in the vicinity of the front flank with a beveled cutter operated in a manner coaxial with the axis of the chainring 1. The beveled cutter may have a bevel angle preferably from about 90° to about 150°, more preferably from about 120° to 140° and most preferably of about 130°. Accordingly, the third chamfer 16 may have an inclination as compared to the plane of the chainring 1 preferably from about 135° to about 165°, more preferably from about 150° to about 160° and most preferably of about 155°.

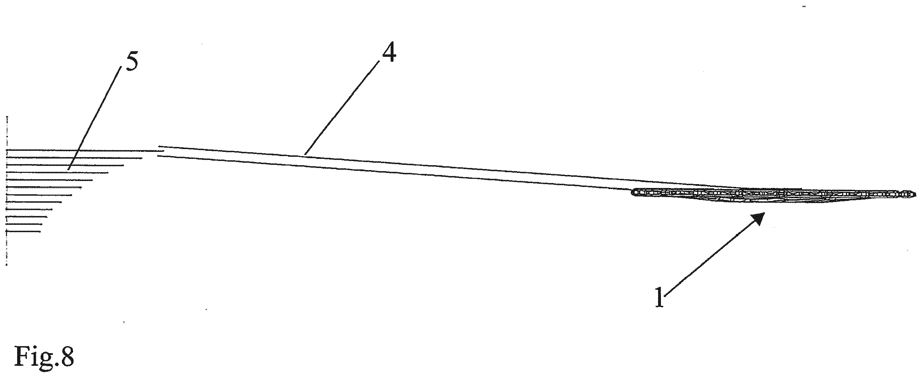

The third chamfer 16 is particularly advantageous if the chainring 1 is used with a cassette 5 as shown in Fig. 8. In particular, with the increase of the misalignment between a sprocket of the cassette 5 and the chainring 1, the lateral movement of the chain 4 is relatively large and the lateral shift of the chain 4 cannot be easily accommodated. The friction between the chain links of the chain 4 and the outboard side 17 of the wide teeth 3 of the chainring 1, when the lateral shift is substantial, will cause wear of the outboard side 17 of the wide teeth 3 if no chamfer is present. Accordingly, the third chamfer 16 is shaped so as to minimize the wear of the outboard side 17 of the wide teeth 3, to help reducing the friction at the chain links or the chain link plates (when under large lateral shift) and therefore substantially reduce the noise between chain and chainring teeth (particularly when the chain is working at a large angle).

The third chamfer 16 may also have the shape of a curved cutout extending in the outboard protrusion 12 from the front flank 13 of the wide tooth 3 towards the radial centerline of the wide tooth 3 when viewed in an axial direction of the chainring 1.

As the third chamfer 16 has a limited extension, namely only in the outboard protrusion and only at the front flank side of the wide tooth 3, the wide tooth 3 according to the invention is not weakened mechanically.

Furthermore, as the third chamfer 16 follows the wear of the wide teeth 3 of the chainring 1, in particular when used to drive the cassette 5 via the chain 4, an uncontrolled wear of the chain 4 and chainring 1 is avoided.

In addition, the noise during operation of the chain is minimized.

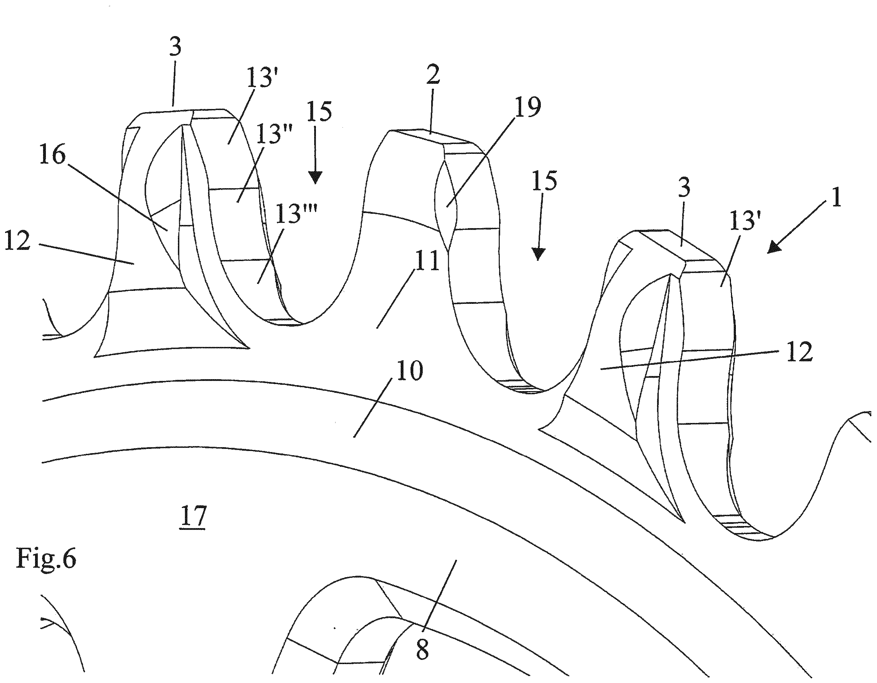

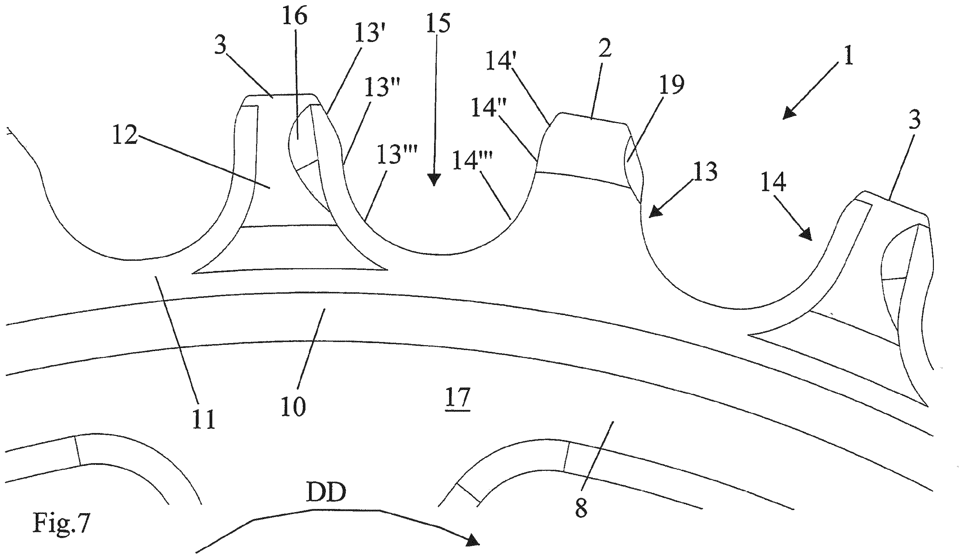

In a variation of the embodiment of Figs. 1 to 5 in the chainring of Figs. 6 and 7 the front flank 13 of each narrow tooth 2 is provided with a fourth chamfer at the outboard side 17 designated with reference numeral 19. Furthermore, the top part of each narrow tooth has a more pronounced trapezoidal shape. Otherwise the embodiment of Figs. 6 and 7 is the same as the embodiment of Figs. 1 to 5.

The fourth chamfer 19 of the narrow tooth 2 is provided in a manner similar to the third chamfer 16 at the wide tooth, only at the outboard side of the narrow tooth 2 and at the front flank side of the narrow tooth 2.

Furthermore, the fourth chamfer 19 of the narrow tooth 2 is provided as a cutaway portion extending between the first chamfer 13' of the front flank 13 of the narrow tooth 2 and the planar surface 11, with the surface of the fourth chamfer 19 extending in an angled manner between the surface of the large chamfer 13' and the planar surface 11.

The fourth chamfer 19 is provided preferably as a planar surface having an obtuse angle with respect to the plane of the chainring 1. The fourth chamfer 19 may be obtained, for instance, by machining away a portion of the narrow tooth 2 at the outboard side in the vicinity of the front flank with a beveled cutter operated in a manner coaxial with the axis of the chainring 1. The beveled cutter may have a bevel angle preferably from about 90° to about 150°, more preferably from about 12° to 140° and most preferably of about 130°. Accordingly, the fourth chamfer 19 may have an inclination as compared to the plane of the chainring 1 preferably from about 135° to about 165°, more preferably from about 150° to about 160° and most preferably of about 155°.

Also preferably the chamfer 19 of the narrow tooth 2 is shaped like a lens.

It has been found to be particularly advantageous if the fourth chamfer 19 of the narrow tooth 2 is provided by removing 2% to 5% of the volume of the narrow tooth 2 at the outboard side at the front flank side.

The function of the fourth chamfer 19 of the narrow tooth 2 is to slant the edge of the narrow tooth 2 a bit for the chain 4 to run smoothly.

The fourth chamfer 19 of the narrow tooth 2 further optimizes the smoothness of operation of the chain 4 when the lateral shift is substantial.

In addition, the fourth chamfer 19 of the narrow tooth 2 further advantageously reduces the friction between chain links of the chain 4 and the outboard side 17 of the narrow teeth 2 of the chainring 1, which leads to a substantial reduction of the noise and wear of the narrow teeth 2 of the chainring 1.

With this invention thus explained, it is apparent that numerous modifications and variations can be made without departing from the scope defined by the appended claims. It is therefore intended that this invention be limited only as indicated by the appended claims.

### List of reference numerals

- 1: chainring
- 2: narrow tooth
- 3: wide tooth
- 4: chain
- 5: cassette
- 6: central aperture
- 7: central ring
- 8: peripheral section of the chainring
- 9: stays
- 10: slanted section
- 11: planar section
- 12: protrusions
- 13: front flank
- 13': first chamfer of the front flank
- 13": steep section of the front flank
- 13‴: section of the front flank responsible for the transmission of force
- 14: rear flank
- 14': second chamfer of the rear flank
- 14": steep section of the rear flank
- 14‴: section of the rear flank symmetrical to the section of the front flank responsible for the transmission of force
- 15: space between teeth
- 16: third chamfer of the protrusion of the wide tooth
- 17: outboard side of the chainring
- 18: inboard side of the chainring
- 19: fourth chamfer of the narrow tooth
- DD: drive direction
- TDP: top driving position
- BRP: bottom release position
- m: extension of roller matching region

## Claims

1. A bicycle chainring (1) for engagement with a drive chain provided with rollers, the chainring comprising:
a plurality of teeth (2, 3) extending from the periphery of the chainring (1), the roots of the plurality of teeth (2, 3) being disposed adjacent to the periphery of the chainring (1), the plurality of teeth (2, 3) including a plurality of narrow teeth (2) and a plurality of wide teeth (3), the narrow and wide teeth (2, 3) being arranged in an alternating manner, each of the teeth (2, 3) having a front flank (13) and a rear flank (14) with respect to a drive direction (DD) of the chainring (1), wherein the front flank (13) and the rear flank (14) of two adjacent teeth (2, 3) define an U-shaped space (15) when seen in the axial direction of the chainring (1) for accommodating a roller of the drive chain,
wherein each tooth (2, 3) includes a first chamfer (13') in the front flank (13) and a second chamfer (14') in the rear flank (14), the first chamfer (13') starting from the top of a respective tooth (2, 3),
wherein both the first chamfer (13') and the second chamfer (14') extend on respective planes which are perpendicular to the plane of the chainring (1),
wherein the first chamfer (13') has a larger extension than the second chamfer (14'), when viewed in the axial direction of the chainring (1), such that the U-shaped space (15), when viewed in the axial direction of the chainring (1), is steeper at the rear flank (14') than at the front flank (13'), **characterised in that**
wherein the first chamfer (13') is followed by a steep section (13"), the steep section (13") being steeper than the first chamfer (13') when seen in the axial direction of the chainring (1), the steep section (13") extending up to a further section (13‴) of the front flank (13) which is responsible for the transmission of the force from the roller.

2. The bicycle chainring (1) of claim 1, **characterized in that** rear flank (14) has a further section (14'") which is symmetrical to the further section (13‴) of the front flank (13), when viewed in the axial direction of the chainring (1), the outline defined by the further sections (13'", 14‴) between the teeth (2, 3), when viewed in the axial direction of the chainring (1), being that of a semicircle to match the rollers of the drive chain exactly, and wherein following the further section (14'") of the rear flank (14), the rear flank (14) has a steep section (14") that is symmetrical to the steep section (13") of the front flank (13), when viewed in the axial direction of the chainring (1) but has a larger extension than the steep section (13") of the first flank (13), and wherein the steep section (14") of the rear flank (14) is further followed by the second chamfer (14').

3. The bicycle chainring (1) of one or more of the preceding claims, **characterized in that** the rear flank (14) is shaped so as to act as a hook for the roller of the drive chain, while the roller is in the U-shaped space (15) on the top of the chainring (1).

4. The bicycle chainring (1) of one or more of the preceding claims, **characterized in that** the ratio of the extension of the second chamfer (14') to that of the first chamfer (13') is from 1:1.5 to 1:2.5, more preferred from 1:1.75 to 1:2.25 and most preferred of 1:2, when viewed in the axial direction of the chainring (1).

5. The bicycle chainring (1) of one or more of the preceding claims, **characterized in that** the first chamfer (13') extends about 20% to 40%, more preferably from 25% to 35% and most preferably for 30% of the height of the front flank (13), when viewed in the axial direction of the chainring (1).

6. The bicycle chainring (1) of one or more of the preceding claims, **characterized in that** the first chamfer (13') is symmetrical to the second chamfer (14'), when viewed in the axial direction of the chainring (1), such that the angle of the first chamfer (13') in respect to a radius of the chainring (1) passing through the center of a tooth (2, 3) is equal to the angle of the second chamfer (14') in respect to said radius.

7. The bicycle chainring (1) of one or more of the preceding claims, **characterized in that** the steep section (13") is parallel to the radial direction of the chainring (1).

8. The bicycle chainring (1) of one or more of the preceding claims, wherein the teeth (2, 3) are symmetrical with respect to the plane of the chainring (1), and wherein the wide teeth (3) are defined by respective protrusions (12) extending symmetrically with respect to the plane of the chainring (1) both on an outboard side (17) and on an inboard side (18) of the chainring (1).

9. The bicycle chainring (1) of one or more of the preceding claims, wherein the wide teeth (3) are defined by respective protrusions (12) extending symmetrically with respect to the plane of the chainring (1) both on an outboard side (17) and on an inboard side (18) of the chainring (1), each wide tooth (3) having a third chamfer (16), the third chamfer (16) being provided in the protrusion (12) only at the outboard side (17) of the wide tooth (3) at a front flank side of the wide tooth (3), the third chamfer (16) extending at an obtuse angle with respect to the plane of the chainring (1).

10. The bicycle chainring (1) of one or more of the preceding claims, wherein the narrow teeth (2) are symmetrical with respect to the plane of the chainring (1), each narrow tooth (2) having a fourth chamfer (19), the fourth chamfer (19) being provided only at the outboard side (17) of the narrow tooth (2) at a front flank side of the narrow tooth (2), the fourth chamfer (19) extending at an obtuse angle with respect to the plane of the chainring (1).

11. The bicycle chainring (1) of claims 9 or 10, wherein
the third chamfer (16) has an inclination, as compared to the plane of the chainring (1), preferably from 135° to 165°, more preferably from 150° to 160° and most preferably of 155°, and/or in that
the third chamfer (16) is provided by removing from 5% to 20% and more preferably from 10% to 15% of the volume of the protrusion (12) of the wide tooth (3) at the outboard side (17), and/or in that
the fourth chamfer (19) has an inclination, as compared to the plane of the chainring (1), preferably from 135° to 165°, more preferably from 150° to 160° and most preferably of 155°, and/or in that
the fourth chamfer (19) is provided by removing from 2% to 5% of the volume of the narrow tooth (2) at the outboard side (17).

12. The bicycle chainring (1) of one or more of the preceding claims, for use with a conventional chain in a bicycle drivetrain system including a bicycle crank, wherein the chainring drives a cassette which provides multiple gear ratios to a rider.

13. A bicycle crank (1) comprising the chainring (1) of one or more of the preceding claims.

## Patentansprüche

1. Ein Fahrrad-Kettenblatt (1) für den Eingriff in eine mit Rollen ausgestattete Antriebskette, wobei das Kettenblatt Folgendes umfasst:
eine Vielzahl von Zähnen (2, 3), die sich von der Peripherie des Kettenblatts (1) erstrecken, wobei die Wurzeln der Vielzahl von Zähnen (2, 3) angrenzend an die Peripherie des Kettenblatts (1) angeordnet sind, wobei die Vielzahl von Zähnen (2, 3) eine Vielzahl schmaler Zähne (2) und eine Vielzahl breiter Zähne (3) einschließt, wobei die schmalen und breiten Zähne (2, 3) alternierend angeordnet sind; wobei jeder der Zähne (2, 3) eine vordere Flanke (13) und eine hintere Flanke (14) mit Bezug auf eine Antriebsrichtung (drive direction, DD) des Kettenblatts (1) hat, wobei die vordere Flanke (13) und die hintere Flanke (14) zweier benachbarter Zähne (2, 3) einen U-förmigen Zwischenraum (15), gesehen in axialer Richtung des Kettenblatts (1), bestimmen, zur Aufnahme einer Rolle der Antriebskette,
wobei jeder Zahn (2, 3) eine erste Abschrägung (13') in der vorderen Flanke (13) und eine zweite Abschrägung (14') in der hinteren Flanke (14) einschließt, wobei die erste Abschrägung (13') am oberen Ende eines entsprechenden Zahns (2, 3) beginnt,
wobei sowohl die erste Abschrägung (13') als auch die zweite Abschrägung (14') sich auf jeweiligen Ebenen erstrecken, die senkrecht zur Ebene des Kettenblatts (1) sind,
wobei die erste Abschrägung (13') eine größere Ausdehnung hat als die zweite Abschrägung (14'), gesehen in axialer Richtung des Kettenblatts (1), so dass der U-förmige Zwischenraum (15), gesehen in axialer Richtung des Kettenblatts (1), an der hinteren Flanke (14') steiler ist als an der vorderen Flanke (13'), **dadurch gekennzeichnet, dass**
die erste Abschrägung (13') von einem steilen Abschnitt (13") gefolgt ist, wobei der steile Abschnitt (13") steiler ist als die erste Abschrägung (13'), gesehen in axialer Richtung des Kettenblatts (1), wobei der steile Abschnitt (13") sich bis zu einem weiteren Abschnitt (13‴) der vorderen Flanke (13) erstreckt, der zur Übertragung der Kraft von der Rolle dient.

2. Das Fahrrad-Kettenblatt (1) gemäß Anspruch 1, **dadurch gekennzeichnet, dass** die hintere Flanke (14) einen weiteren Abschnitt (14‴) hat, der symmetrisch zu dem weiteren Abschnitt (13‴) der vorderen Flanke (13), gesehen in axialer Richtung des Kettenblatts (1), ist, wobei die Kontur, die durch die weiteren Abschnitte (13‴, 14‴) zwischen den Zähnen (2, 3), gesehen in axialer Richtung des Kettenblatts (1), diejenige eines Halbkreises ist, um genau den Rollen der Antriebskette zu entsprechen, und wobei beim Folgen des weiteren Abschnitts (14‴) der hinteren Flanke (14) die hintere Flanke (14) einen steilen Abschnitt (14") hat, der symmetrisch zum steilen Abschnitt (13") der vorderen Flanke (13), gesehen in axialer Richtung des Kettenblatts (1), ist, aber eine größere Ausdehnung hat als der steile Abschnitt (13") der ersten Flanke (13), und wobei der steile Abschnitt (14") der hinteren Flanke (14) weiter von der zweiten Abschrägung (14') gefolgt ist.

3. Das Fahrrad-Kettenblatt (1) gemäß einem oder mehreren der obigen Ansprüche, **dadurch gekennzeichnet, dass** die hintere Flanke (14) geformt ist, um als Haken für die Rolle der Antriebskette zu dienen, während die Rolle sich im U-förmigen Zwischenraum (15) oben auf dem Kettenblatt (1) befindet.

4. Das Fahrrad-Kettenblatt (1) gemäß einem oder mehreren der obigen Ansprüche, **dadurch gekennzeichnet, dass** das Verhältnis der Ausdehnung der zweiten Abschrägung (14') zu derjenigen der ersten Abschrägung (13') 1:1,5 bis 1:2,5, stärker bevorzugt 1:1,75 bis 1:2,25 und am meisten bevorzugt 1:2, gesehen in axialer Richtung des Kettenblatts (1), beträgt.

5. Das Fahrrad-Kettenblatt (1) gemäß einem oder mehreren der obigen Ansprüche, **dadurch gekennzeichnet, dass** die erste Abschrägung (13') sich über ungefähr 20% bis 40%, stärker bevorzugt 25% bis 35% und am meisten bevorzugt 30% der Höhe der vorderen Flanke (13), gesehen in axialer Richtung des Kettenblatts (1), erstreckt.

6. Das Fahrrad-Kettenblatt (1) gemäß einem oder mehreren der obigen Ansprüche, **dadurch gekennzeichnet, dass** die erste Abschrägung (13') symmetrisch zu der zweiten Abschrägung (14'), gesehen in axialer Richtung des Kettenblatts (1), ist, so dass der Winkel der ersten Abschrägung (13') mit Bezug auf einen Radius des Kettenblatts (1), der durch die Mitte eines Zahns (2, 3) verläuft, gleich dem Winkel der zweiten Abschrägung (14') mit Bezug auf den Radius ist.

7. Das Fahrrad-Kettenblatt (1) gemäß einem oder mehreren der obigen Ansprüche, **dadurch gekennzeichnet, dass** der steile Abschnitt (13") parallel zur radialen Richtung des Kettenblatts (1) ist.

8. Das Fahrrad-Kettenblatt (1) gemäß einem oder mehreren der obigen Ansprüche, wobei die Zähne (2, 3) symmetrisch mit Bezug auf die Ebene des Kettenblatts (1) sind und wobei die breiten Zähne (3) durch entsprechende Vorsprünge (12) bestimmt sind, die sich symmetrisch mit Bezug auf die Ebene des Kettenblatts (1) sowohl auf einer Außenbordseite (17) als auch auf einer Innenbordseite (18) des Kettenblatts (1) erstrecken.

9. Das Fahrrad-Kettenblatt (1) gemäß einem oder mehreren der obigen Ansprüche, wobei die breiten Zähne (3) durch entsprechende Vorsprünge (12) bestimmt sind, die sich symmetrisch mit Bezug auf die Ebene des Kettenblatts (1), sowohl auf einer Außenbordseite (17) als auch auf einer Innenbordseite (18) des Kettenblatts (1), erstrecken, wobei jeder breite Zahn (3) eine dritte Abschrägung (16) hat, wobei die dritte Abschrägung (16) im Vorsprung (12) nur an der Außenbordseite (17) des breiten Zahns (3), an einer vorderen Flankenseite des breiten Zahns (3), angebracht ist, wobei die dritte Abschrägung (16) sich in einem stumpfen Winkel mit Bezug auf die Ebene des Kettenblatts (1) erstreckt.

10. Das Fahrrad-Kettenblatt (1) gemäß einem oder mehreren der obigen Ansprüche, wobei die schmalen Zähne (2) symmetrisch mit Bezug auf die Ebene des Kettenblatts (1) sind, wobei jeder schmale Zahn (2) eine vierte Abschrägung (19) hat, wobei die vierte Abschrägung (19) nur an der Außenbordseite (17) des schmalen Zahns (2) an einer vorderen Flankenseite des schmalen Zahns (2) angebracht ist, wobei die vierte Abschrägung (19) sich in einem stumpfen Winkel mit Bezug auf die Ebene des Kettenblatts (1) erstreckt.

11. Das Fahrrad-Kettenblatt (1) gemäß Anspruch 9 oder 10, wobei
die dritte Abschrägung (16) eine Neigung, mit Bezug auf die Ebene des Kettenblatts (1), vorzugsweise von 135° bis 165°, stärker bevorzugt von 150° bis 160° und am stärksten bevorzugt von 155° hat und/oder wobei
die dritte Abschrägung (16) hergestellt wird durch Entfernen von 5% bis 20% und stärker bevorzugt 10% bis 15% des Volumens des Vorsprungs (12) des breiten Zahns (3) an der Außenbordseite (17) und/oder wobei
die vierte Abschrägung (19) eine Neigung mit Bezug auf die Ebene des Kettenblatts (1) von vorzugsweise 135° bis 165°, stärker bevorzugt 150° bis 160° und am stärksten bevorzugt 155° hat und/oder wobei
die vierte Abschrägung (19) hergestellt wird durch Entfernen von 2% bis 5% des Volumens des schmalen Zahns (2) an der Außenbordseite (17).

12. Das Fahrrad-Kettenblatt (1) gemäß einem oder mehreren der obigen Ansprüche zur Verwendung mit einer herkömmlichen Kette in einem Fahrrad-Antriebssystem, das eine Fahrradkurbel einschließt, wobei, das Kettenblatt eine Kassette antreibt, die einem Fahrer mehrere Übersetzungsverhältnisse zur Verfügung stellt.

13. Eine Fahrradkurbel (1), die das Kettenblatt (1) gemäß einem oder mehreren der obigen Ansprüche umfasst.

## Revendications

1. Couronne de chaîne de bicyclette (1) destinée à s'engager avec une chaîne d'entraînement dotée de galets, la couronne de chaîne comprenant :
une pluralité de dents (2, 3) s'étendant à partir de la périphérie de la couronne de chaîne (1), les bases de la pluralité de dents (2, 3) étant disposées de façon adjacente à la périphérie de la couronne de chaîne (1), la pluralité de dents (2, 3) incluant une pluralité de dents étroites (2) et une pluralité de dents larges (3), les dents étroites et larges (2, 3) étant agencées de manière alternée, chacune des dents (2, 3) présentant un flanc avant (13) et un flanc arrière (14) par rapport à une direction d'entraînement (DD) de la couronne de chaîne (1), dans laquelle le flanc avant (13) et le flanc arrière (14) de deux dents (2, 3) adjacentes définissent un espace en forme de U (15), vu dans la direction axiale de la couronne de chaîne (1), pour la réception d'un galet de la chaîne d'entraînement,
dans laquelle chaque dent (2, 3) inclut un premier chanfrein (13') dans le flanc avant (13) et un deuxième chanfrein (14') dans le flanc arrière (14), le premier chanfrein (13') commençant au sommet d'une dent (2, 3) respective,
dans laquelle le premier chanfrein (13') et le deuxième chanfrein (14') s'étendent tous deux sur des plans respectifs, lesquels sont perpendiculaires au plan de la couronne de chaîne (1),
dans laquelle le premier chanfrein (13') présente une plus grande extension que le deuxième chanfrein (14'), vu dans la direction axiale de la couronne de chaîne (1), de sorte que l'espace en forme de U (15), vu dans la direction axiale de la couronne de chaîne (1), est plus pentu au niveau du flanc arrière (14') qu'au niveau du flanc avant (13'), **caractérisée en ce que**
dans laquelle le premier chanfrein (13') est suivi d'une section pentue (13"), la section pentue (13") étant plus pentue que le premier chanfrein (13'), vue dans la direction axiale de la couronne de chaîne (1), la section pentue (13") s'étendant jusqu'à une section suivante (13‴) du flanc avant (13), laquelle assure la transmission de la force à partir du galet.

2. Couronne de chaîne de bicyclette (1) selon la revendication 1, **caractérisée en ce que** le flanc arrière (14) présente une section suivante (14‴), laquelle est symétrique à la section suivante (13‴) du flanc avant (13), vue dans la direction axiale de la couronne de chaîne (1), le contour défini par les sections suivantes (13‴, 14‴) entre les dents (2, 3), vu dans la direction axiale de la couronne de chaîne (1), étant celui d'un demi-cercle destiné à correspondre exactement aux galets de la chaîne d'entraînement, et dans laquelle, après la section suivante (14‴) du flanc arrière (14), le flanc arrière (14) présente une section pentue (14"), laquelle est symétrique à la section pentue (13") du flanc avant (13), vue dans la direction axiale de la couronne de chaîne (1), mais présente une plus grande extension que la section pentue (13") du premier flanc (13), et dans laquelle la section pentue (14") du flanc arrière (14) est ensuite suivie du deuxième chanfrein (14').

3. Couronne de chaîne de bicyclette (1) selon l'une ou plusieurs des revendications précédentes, **caractérisée en ce que** le flanc arrière (14) est formé de manière à agir comme un crochet pour le galet de la chaîne d'entraînement, tandis que le galet se trouve dans l'espace en forme de U (15) sur le haut de la couronne de chaîne (1).

4. Couronne de chaîne de bicyclette (1) selon l'une ou plusieurs des revendications précédentes, **caractérisée en ce que** le rapport de l'extension du deuxième chanfrein (14') à celle du premier chanfrein (13') est compris entre 1:1,5 et 1:2,5, plus préférentiellement entre 1:1,75 et 1:2,25 et le plus préférentiellement égal à 1:2, vu dans la direction axiale de la couronne de chaîne (1).

5. Couronne de chaîne de bicyclette (1) selon l'une ou plusieurs des revendications précédentes, **caractérisée en ce que** le premier chanfrein (13') s'étend sur environ 20 % à 40 %, plus préférentiellement 25 % à 35 % et le plus préférentiellement sur 30 % de la hauteur du flanc avant (13), vu dans la direction axiale de la couronne de chaîne (1).

6. Couronne de chaîne de bicyclette (1) selon l'une ou plusieurs des revendications précédentes, **caractérisée en ce que** le premier chanfrein (13') est symétrique au deuxième chanfrein (14'), vu dans la direction axiale de la couronne de chaîne (1), de sorte que l'angle du premier chanfrein (13') par rapport à un rayon de la couronne de chaîne (1) traversant le centre d'une dent (2, 3) est égal à l'angle du deuxième chanfrein (14') par rapport audit rayon.

7. Couronne de chaîne de bicyclette (1) selon l'une ou plusieurs des revendications précédentes, **caractérisée en ce que** la section pentue (13") est parallèle à la direction radiale de la couronne de chaîne (1).

8. Couronne de chaîne de bicyclette (1) selon l'une ou plusieurs des revendications précédentes, dans laquelle les dents (2, 3) sont symétriques par rapport au plan de la couronne de chaîne (1), et dans laquelle les dents larges (3) sont définies par des saillies (12) s'étendant symétriquement par rapport au plan de la couronne de chaîne (1) à la fois sur un côté extérieur (17) et sur un côté intérieur (18) de la couronne de chaîne (1).

9. Couronne de chaîne de bicyclette (1) selon l'une ou plusieurs des revendications précédentes, dans laquelle les dents larges (3) sont définies par des saillies (12) respectives s'étendant symétriquement par rapport au plan de la couronne de chaîne (1) à la fois sur un côté extérieur (17) et sur un côté intérieur (18) de la couronne de chaîne (1), chaque dent large (3) possédant un troisième chanfrein (16), le troisième chanfrein (16) étant disposé dans la saillie (12) uniquement sur le côté extérieur (17) de la dent large (3) au niveau d'un côté de flanc avant de la dent large (3), le troisième chanfrein (16) s'étendant selon un angle obtus par rapport au plan de la couronne de chaîne (1).

10. Couronne de chaîne de bicyclette (1) selon l'une ou plusieurs des revendications précédentes, dans laquelle les dents étroites (2) sont symétriques par rapport au plan de la couronne de chaîne (1), chaque dent étroite (2) possédant un quatrième chanfrein (19), le quatrième chanfrein (19) étant disposé uniquement au niveau du côté extérieur (17) de la dent étroite (2) au niveau d'un côté de flanc avant de la dent étroite (2), le quatrième chanfrein (19) s'étendant selon un angle obtus par rapport au plan de la couronne de chaîne (1).

11. Couronne de chaîne de bicyclette (1) selon les revendications 9 ou 10, dans laquelle
le troisième chanfrein (16) présente une inclinaison, en comparaison avec le plan de la couronne de chaîne (1), de préférence de 135° à 165°, plus préférentiellement de 150° à 160° et le plus préférentiellement de 155°, et/ou
le troisième chanfrein (16) est conçu en enlevant entre 5 % et 20 % et plus préférentiellement entre 10 % et 15 % du volume de la saillie (12) de la dent large (3) au niveau du côté extérieur (17), et/ou
le quatrième chanfrein (19) présente une inclinaison, en comparaison avec le plan de la couronne de chaîne (1), de préférence de 135° à 165°, plus préférentiellement de 150° à 160° et le plus préférentiellement de 155°, et/ou
le quatrième chanfrein (19) est conçu en enlevant entre 2 % et 5 % du volume de la dent étroite (2) au niveau du côté extérieur (17).

12. Couronne de chaîne de bicyclette (1) selon l'une ou plusieurs des revendications précédentes, destinée à être utilisée avec une chaîne classique dans un système de transmission pour bicyclette incluant une manivelle de bicyclette, dans laquelle la couronne de chaîne entraîne une cassette fournissant plusieurs rapports de vitesses à un cycliste.

13. Manivelle de bicyclette (1) comprenant la couronne de chaîne (1) selon l'une ou plusieurs des revendications précédentes.
